# EUROPEAN PATENT APPLICATION

(11) **EP 4 643 841 A1**
(43) Date of publication of application: **05.11.2025**
(21) Application number: 25173613.8
(22) Date of filing: 30.04.2025
(51) Int. Cl.: A61J 7/02, G01N 21/95

(54) **WORKSTATION FOR PREPARATION OF MEDICATION TRAY**

(30) Priority: 03.05.2024 CH 4852024
(71) Applicant: Sanetics AG, 8406 Winterthur (CH)
(72) Inventor: Kappler, Christian, 8406 Winterthur (CH); Wullschleger, Fabio, 8406 Winterthur (CH)
(74) Representative: Rentsch Partner AG

(57) **Abstract**

The disclosure relates to a workstation (1) for preparation of a medication tray, the workstation (1) comprising: a top deck (2) with a plurality of deck cutouts (21, 21A, 21B) arranged in a defined deck pattern; a support section (3) arranged underneath the top deck (2), wherein the support section (3) comprises a light transmissible layer (32); a lighting system (62) configured to transmit light into the light transmissible layer (32); and a receiving compartment (4) arranged underneath the support section (3), configured to receive a medication tray having a plurality of receptacles (71, 71A, 71B).

## Description

### FIELD OF THE DISCLOSURE

The present disclosure relates to a workstation for preparation of a medication tray.

### BACKGROUND OF THE DISCLOSURE

Many patients in hospitals and nursing homes receive medication according to a defined medication plan or schedule. The medication plan prescribed by a doctor, for example, defines which medications are to be taken by the patient and when. For example, the medication plan may define that, for a given week, a first medication type is to be taken daily before breakfast, while a second medication type is to be taken three days per week with the evening meal.

Typically, such medication is organized in a medication tray which comprises a plurality of receptacles. Typically, the receptacles are arranged in a grid pattern. Such a medication tray may be prepared in advance for a day or for a week, for example. A typical medication tray may therefore comprise receptacles arranged in seven columns, one for each day of the week, and arranged one to four rows, each for a different time of day.

Because of the vital importance of ensuring that the correct medication is given to the correct patient, the medication tray is prepared only by trained personnel, such as nurses. The nurses follow the medication plan and place medication (e.g., tablets, pills, capsules, lozenges) in the appropriate receptacles. To ensure no mistakes are made, a second person will then usually check whether the medication was placed correctly, before the medication tray is provided to the patient. This "four eye" control principle however requires large personnel resources and is also not infallible, in that due to oversight incorrect medication may be placed in the medication tray. A further source of error is that, while the medication tray may itself be correctly prepared, the medication tray may be provided to the wrong patient.

Patients in nursing homes in particular often receive large numbers of daily medication. For example, patients with dementia, which are common in nursing homes, are often prescribed up to 7 or 8 separate medications daily, many of which target chronic conditions and must be taken over long periods of time. Preparing all these medications correctly is a large burden for nursing home staff, and therefore devices and methods have been proposed to overcome some of the drawbacks of the manual approach described above.

EP4150594A1 discloses a docking station and a method for loading a medicine transport plate. Also disclosed is a camera to monitor the medicine items placed in preparation compartments, however EP4150594A1 does not mention how precisely such monitoring occurs or what this monitoring entails, and has the further drawback that, due to occlusion by the sides of each compartment or different ambient light scenarios, the camera may not always faithfully be able to monitor the medicine items.

### SUMMARY OF THE DISCLOSURE

It is an object of the disclosure and embodiments disclosed herein to provide a workstation for the preparation of a medication tray.

In particular it is an object of the disclosure to provide a workstation for the preparation of a medication tray which does not have at least one of the drawbacks of the prior art.

According to the present disclosure, a workstation for preparation of a medication tray comprises a top deck with a plurality of deck cutouts arranged in a defined deck pattern. The top deck is preferably implemented as a rectangular plate extending in the horizontal, i.e. x-y, plane. The top deck has a top surface and a bottom surface. The deck cutouts may be implemented as holes in the top deck extending through the top deck from the top surface to the bottom surface, the holes having a defined shape (e.g. their two-dimensional horizontal shape at the top surface of the top deck), which may be substantially circular, rectangular, polygonal, etc.. The defined deck pattern may form a two dimensional lattice, array, or grid, for example comprising of one or more rows (extending in the x-direction) and one or more columns (each column extending in the y-direction). Typically the deck pattern will have between one and seven columns, and between one and five rows. One example of a deck pattern is a grid pattern of 4 rows and 7 columns. The deck cutouts may have a profile, i.e. a different shape or size at the bottom surface than at the top surface. For example, the profile may be in the form of a chamfer, bevel, fillet, etc. such that the edges of the deck cutouts slope inwards, the deck cutouts thereby having a smaller area at the bottom surface than the top surface.

The workstation comprises a support section arranged underneath the top deck. The support section may have a size and shape corresponding substantially to that of the top deck. The support section is preferably implemented as a rectangular plate. The support section comprises a light transmissible layer. For example, the light transmissible layer is made of or comprises a translucent material, e.g. a plastic sheet made of, for example, acrylic. However, other light transmissible, in particular translucent, materials are also possible, such as frosted glass.

The support section is designed to support any medication, e.g. pills, which are placed in the deck cutouts of the top deck, when the top deck and support section are in a default configuration relative to each other. Preferably, the upper surface of the support section comprises, in whole or in part, the light transmissible layer. It is not necessary that the entire upper part of the support section is made of the light transmissible layer. It may be that only a part of the support section which corresponds to the deck cutouts is made of the light transmissible layer.

The workstation comprises a lighting system configured to transmit light into the support section, in particular into the light transmissible layer. Thereby, light travels through the light transmissible layer. The lighting system provides the workstation with a reliable source of light and particularly allows for the operators to more easily see and recognize the pills placed in the top deck cutouts, as the pills are in stark relief to the brightly illuminated support section underneath the pills. This leads to a reduction in the number of errors due to incorrect placement or counting of pills.

The workstation comprises a receiving compartment arranged underneath the support section. The receiving compartment is configured to receive a medication tray having a plurality of receptacles. At least some of the receptacles of the medication tray may be arranged in a similar pattern as the top deck pattern.

In an embodiment, the support section includes a plurality of support cutouts arranged in a defined support section pattern. The support section pattern at least partially matches the deck pattern. The support cutouts are laterally offset from the deck cutouts when the support section and the top deck are in a first default configuration. The support cutouts may have a shape and size which correspond to the deck cutouts. In particular, the support cutouts may have a shape and size corresponding to the size of the deck cutouts at the bottom surface of the top deck. The support section cutouts may extend vertically through the entire support section, i.e. also through the light transmissible layer.

In an embodiment, the lighting system is configured to cause the support section to provide a back light for the deck cutouts in the top deck. In particular, the light transmissible layer of the support section may act as a back light for the deck cutouts in the top deck, particularly when the top deck and the support section are in the first default configuration relative to each other.

In an embodiment, the backlight in particular causes the support section, in particular the light transmissible layer, to provide an evenly lit backlight for the deck cutouts. Evenly lit means that the light intensity is with a small defined flux range so that no dark or light spots are apparent to the naked eye.

In an embodiment, the top deck and the support section are arranged displaceable relative to each other in a lateral direction between a first default configuration and a second drop configuration. The deck cutouts and the support cutouts do not align in a vertical direction in the first default configuration. Thereby, any medication (e.g., pills or tablets) placed in the top deck cutouts remain inside the deck cutouts, supported by the support section. The deck cutouts and the support cutouts at least partially overlap in a vertical direction in the second drop configuration. Thereby, any medication present in the deck cutouts falls through the support section, in particular through the support cutouts, onto the medication tray arranged below.

The first default configuration and the second drop configuration may be defined end points in a defined linear range of motion (particularly in the horizontal y-direction) of the top deck and support section with respect to each other.

The workstation may comprise a biasing member (e.g., a spring) configured to bias the top deck and support section towards the first default configuration. A force, for example exerted by an operator, acts against the biasing force to temporarily bring the top deck and the support section to the second drop configuration.

In an embodiment, the support section is fixedly fastened to the workstation and the top deck is laterally movable (in particular backwards in the horizontal y-direction) relative to the support section.

In an embodiment, the top deck is fixedly fastened to the work station and the support section is laterally movable (in particular backwards in the horizontal y-direction) relative to the support section.

Movement of the top deck and support section in other directions is also possible, for example in the lateral x-direction (sideways).

In an embodiment, the support section comprises a light transmissible layer, in particular a translucent layer, and a light support section, for example in the form of a circuit board, e.g. a printed circuit board (PCB), arranged underneath the light transmissible layer. The light support section may comprise electrical interconnects for electrically powering and/or controlling the lights.

The lighting system may comprise a plurality of lights, e.g. light emitting diodes (LEDs), which may be arranged on top of the light support section and preferably configured to direct light upwards into and through the light transmissible layer. The lights may be arranged as individual components, for example on the light support section. The lights may be arranged as one or more light strips or light lines which may be attached to the light support section. The lighting system may thereby be at least partially integrated into the support section. The lighting system may additionally or alternative comprise a CCFL backlight (aka: cold-cathode fluorescent lamps backlight) connected to the light support section.

The light support section preferably has cutouts corresponding to the support section cutouts.

The arrangement of the plurality of lights is preferably matched to the defined pattern of the top deck cutouts. In particular, the plurality of lights comprises one light per top deck cutout, the light arranged on the light support section such that, when the top deck is in the first default configuration relative to the support section, a given light is arranged centrally underneath a corresponding top deck cutout.

The lights are preferably arranged such that support section, in particular in the areas of the support section visible through the top deck cutouts, are evenly lit, in particular in the area of each top deck cutout.

The light transmissible layer and light support section are spaced apart by a defined distance such that the lights provide for even illumination in the top deck cutouts. Spacer elements may be provided to set the defined distance between the light transmissible layer and the light support section.

In an embodiment, the receiving compartment comprises positioning elements designed to position the medication tray in one of two or more different positions. The positioning elements ensure that the medication tray, when it is inserted or placed into the receiving compartment, is situated correctly with respect to the top deck cutouts, such that, when the top deck layer and the support section are moved from the first default configuration to the second drop configuration, the medication falls through the support section into the appropriate receptacles.

In some embodiments, the medication tray may comprise more receptacles than there are deck cutouts, for example twice as many. In such a situation, the medication tray can be placed, for example, in one of two different positions in the receiving compartment and, depending on which position the medication tray is placed in, one of two disparate sets of receptacles are arranged underneath the deck cutouts and thereby addressed. By subsequently switching positions, the second of the two sets may be addressed.

The receiving compartment may be implemented as a pull-out drawer into which the medication tray can be placed, before the drawer is pushed back into position underneath the top deck and support section.

In an embodiment, the workstation may comprise a camera arranged above the top deck and oriented towards the top deck. The camera is configured to record one or more images of the top deck of the workstation, in particular during and/or after filling of the top deck cutouts with medication according to a medication plan. The recorded image may be stored for reference purposes or analyzed as described herein to detect pills placed in the top deck cutouts. The lighting system ensures that any pills placed in the deck cutouts are recorded in stark relief, allowing for better edge detection of the pills and allowing for use of the workstation under various ambient lighting conditions in which it cannot be ensured that the recorded images will have a quality suitable for future reference or analysis.

The workstation may further comprise a control unit connected to the lighting system and the camera. The control unit is configured to control the lighting system and the camera such that the lighting system activates simultaneously with the camera recording an image. Thereby, the lighting system provides back lighting of the top deck cutouts while the camera records the image.

The control system and/or the lighting system may be configured such that the lighting system activates only for a pre-defined period of time, e.g. in the form of a flash, during which the camera is triggered to record an image. Thereby, a higher light intensity can be used without unduly disturbing the operator/personnel using the workstation.

In an embodiment, the control unit is configured to perform a number of steps. The control unit is configured to receive from the camera the recorded image. The control unit is configured to detect one or more pills in the plurality of deck cutouts, using the recorded image. The control unit is configured to identify, for each detected pill, which type of pill the detected pill is, from amongst a plurality of different types of pills. The control unit is configured to check, for each identified pill, whether the identified pill is placed correctly according to a defined medication plan. The control unit is configured to generate a message indicative of correct placement of the pills if the pills were placed correctly. The message may be displayed on a display, for example.

The defined medication plan may be received, by the control unit, via a communication interface. The communication interface may be part of the workstation. The medication plan may be associated with a person, e.g., a patient, using a patient identifier included or associated with the medication plan. The medication plan lists one or more types of pills, and for each type of pill, one or more times (e.g. times during the day and/or during the week) where the pill is to be taken by the patient.

The control unit may be configured to check whether a given pill is placed correctly according to the medication plan by determining one or more characteristics of the detected pill, the characteristics including: a size, a shape, a form or a color of the pills. The determined characteristics may be compared to known characteristics of one or more types of pills to determine a most likely match.

In an embodiment, the control unit is further configured to perform the mentioned steps for each of a plurality of types of pills.

In an embodiment, the top deck further comprises an indicator element arranged in, at, or adjacent to each deck cutout. A particular indicator element of the plurality of indicator elements is configured to provide an indication of a number of pills to be placed in the particular deck cutout. The indicator element is connected and may be controlled by to the control unit. The number to be displayed on each indicator element is provided by the medication plan.

The indicator elements may be implemented using one or more lights, e.g., LEDs. For example, if the number to be displayed is three, then three LEDs of the indicator element light up. Depending on the implementation, the indicator element may include up to four, or up to six lights.

The indicator elements may, alternatively or additionally, be implemented using a digital display configured to display a number as a digit. The digital display may be implemented using a common seven segment LED, VFD or LCD for the display of the digit.

The lights and/or display which implement part of indicator elements may be arranged on the top deck. The lights and/or display may alternatively be arranged underneath the top deck, in particular in the support section, for example on the light support section which may also form part of the lighting system. In such a manner, the lights and/or display which implement part of the indicator elements may be arranged on the same layer (i.e., the light support section, which may be implemented as a circuit board) as the lights which form part of the lighting system, thereby simplifying the manufacture and reducing costs as the number of electronic parts, in particular circuit boards or electric connectors, are reduced.

The top deck may comprise, for each indicator element, one or more indicator element cutout sections, in particular in the form of a narrow strip cutout or bores, such that the light emitted by the lights and/or display arranged under the top deck, in particular on the light support section, can pass through the top deck and be visible to the operator/personnel.

A particular indicator element in the form of a narrow strip cutout in the top deck and a plurality of lights arranged underneath the top deck on the light support section may be arranged next to a corresponding particular top deck cutout, the number of illuminated lights indicative of a corresponding number.

The indicator element may comprise one or more light transmitting members, for example in the form of a plastic light pipe arranged above each light, to improve visibility of the indicator element.

Other implementation options for the indicator elements may include using an electronic foil layer with integrated LEDs, the foil layer applied to the top deck.

In an embodiment, the workstation further comprises a display connected to the control unit. The control unit is configured to control the display such that a number of pills of a particular type to be arranged in the deck cutouts is displayed. The control unit may use the medication plan to determine the number of pills of a particular type to display. The control unit may be configured to display, for each pill, a picture and/or a description of the pill.

In an embodiment, the workstation further comprises a locking mechanism connected to the control unit, the control unit configured to control the locking mechanism to allow relative movement between the top deck and the support section only upon determination that the pills were placed correctly.

In an embodiment, the control unit comprises a communication interface and is connected to an electronic wireless reader. The control unit is further configured to read, using the electronic wireless reader, from the medication tray, a medication tray identifier. The control unit is configured to receive, using a communication interface, a defined medication plan. The control unit is configured to check whether pills were placed correctly according to a defined medication plan. The control unit is configured to generate a message indicative of correct placement of the pills, wherein the message further comprises the medication tray identifier.

The electronic wireless reader may be implemented as an RFID reader. The medication tray identifier may be configured as an RFID tag, in particular an NFC tag. The RFID reader, resp, NFC reader, may be configured to read the RFID tag.

The electronic wireless reader is designed and arranged in the workstation such that, when a medication tray is present in the receiving compartment of the workstation, the medication tray identifier is read by the electronic wireless reader. For example, the electronic wireless reader may be arranged on the circuit board at a position such that, when the medication tray is present in the receiving compartment, the medication tray identifier is within a defined reading distance of the electronic wireless reader. The reading distance is preferably within a distance of 0.1 cm to 10 cm, most preferably within 1 cm.

The wireless reader may alternatively be implemented as an optical reader, e.g., a QR code or barcode scanner.

In an embodiment, a patient identifier may be associated with the medication tray identifier. The association may be determined by the control unit using the medication plan, i.e. the medication plan may define, for a particular patient, a particular medication tray identifier. Alternatively, the control unit may be configured to establish an association between a patient identifier which relates to a particular medication plan to which a current medication preparation process relates, and a medication tray identifier read from the medication tray present in the receiving compartment.

In an embodiment, the control unit is connected to a further electronic wireless reader configured to read, from an operator the workstation, a personnel identifier and to record the personnel identifier in association with the medication tray identifier and/or the medication plan. Thereby, the workstation may log the personnel who prepared a particular medication tray according to a particular medication plan.

The present disclosure also relates to a computer program product for verification of a product, comprising computer program code configured to control a processing unit such that the processing unit performs one or more of the methods or steps thereof as described herein.

In an embodiment, the computer program product for verification of a product is implemented as a non-transitory computer readable medium, having stored thereon the computer program code configured to control the processing unit to perform one or more of the methods of steps thereof as described herein.

### BRIEF DESCRIPTION OF THE DRAWINGS

The herein described disclosure will be more fully understood from the detailed description given herein below and the accompanying drawings, which should not be considered limiting to the invention described in the appended claims. The drawings in which:
- Fig. 1: shows a perspective view of a schematic drawing of a workstation in the first default configuration in which the operator places pills in the deck cutouts on the top deck;
- Fig. 2: shows a perspective view of a schematic drawing of a workstation in the second drop configuration in which the pills fall from the deck cutouts through the support section onto the medication tray underneath;
- Fig. 3: shows a perspective view of a schematic drawing of a workstation in the first default configuration with the drawer of the receiving compartment opened such that the medication tray may be removed after having been filled;
- Fig. 4: shows a side section view of a schematic drawing of a workstation in the first default configuration in which the operator places pills in the deck cutouts on the top deck;
- Fig. 5: shows a side section view of a schematic drawing of a workstation in the first default configuration in which the operator places pills in the deck cutouts on the top deck and in which the medication tray has been positioned in a second alternative position in the receiving compartment such that different receptacles are addressed for filling;
- Fig. 6: shows a side section view of a schematic drawing of a workstation in the second drop configuration in which the pills fall from the deck cutouts through the support section onto the medication tray underneath;
- Fig. 7: shows a cropped image recorded by the camera of a workstation showing a number of pills placed in a deck cutout;
- Fig. 8: shows a block diagram illustrating schematically the electronic system of a workstation comprising a control unit and various other devices electrically connected to the control unit;
- Fig. 9: shows a flow diagram illustrating a method comprising a series of steps performed by the control unit of the workstation for checking whether pills were placed correctly;
- Fig. 10: shows a flow diagram illustrating a method comprising a series of steps performed by the control unit of the workstation for generating assisting an operator in preparing the medication tray; and
- Fig. 11: shows a flow diagram illustrating a method comprising a series of steps for preparation of a medication tray using the workstation.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

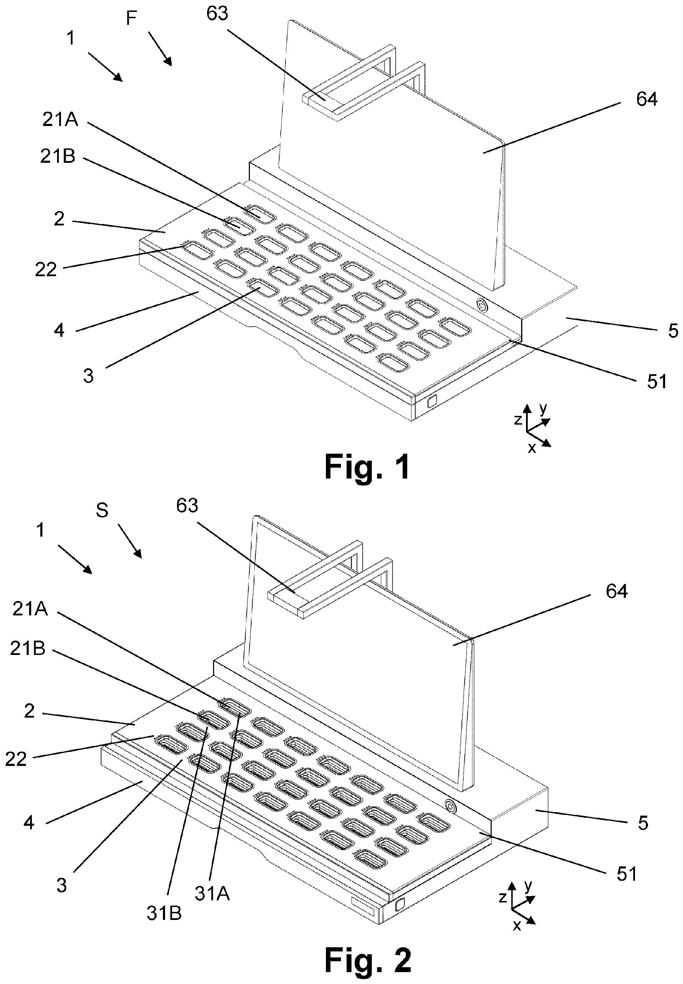

**Fig. 1** shows a workstation 1. The workstation 1 is an apparatus which may be used for preparation of a medication tray. The workstation 1 is typically placed on a work surface such as a desk or counter top. The workstation 1 may be used by a trained operator or personnel, such as a nurse. The workstation 1 may be used wherever it is necessary to prepare medication trays for patients, or more generally people who require regular medication. Particularly facilities such as hospitals and nursing homes which must prepare medication trays for large numbers of patients benefit from use of the workstation 1 as it increases the speed and reliability of preparing medication trays while also reducing the risk of operator error.

The workstation 1 has a base 5 with a substantially rectangular form factor. A front portion of the base 5 accommodates the preparation of the medication and includes the top deck 2, support section 3, and receiving compartment 4 stacked on top of each other, while the rear portion of the base 5 includes a stand onto which the camera 63 and display 64 are mounted.

The top deck 2 is rectangular and plate shaped with a substantially flat top surface arranged in the horizontal x-y plane. The top deck 2 features a plurality of deck cutouts 21A, 21B arranged in a defined pattern. The pattern shown is a square grid pattern with seven columns and four rows. The seven columns reflect the seven days of the week, while the four rows relate to times of the day (e.g., breakfast, lunch, dinner, and before bedtime). The deck cutouts 21A, 21B have a roughly rectangular shape with chamfered edges. The deck cutouts 21A, 21B extend through the entire top deck 2.

The top deck 2 as shown is in the first default configuration F. The top deck 2 is slidably arranged, for example on rails 51, on the base 5 such that it can be moved backwards (i.e. in the positive y-direction) by a defined distance. Preferably, a biasing mechanism is arranged to exert a returning force against the top deck 2 to return it back to the first default configuration F if moved.

During preparation, the operator of the workstation places medication, e.g., pills, into the deck cutouts 21A, 21B according to a defined medication plan. The defined medication plan is associated with a particular patient and defines, for that patient, medication that the patient has been prescribed to take during a defined time period, for example for the next week. The prescription, as indicated on the medication plan, may include a number of different types of medication.

The top deck 2 further features indicator elements 22 next to each deck cutout 21A, 21B. Each indicator element provides, to the operator, an indication of a number, for example in the form of a displayed digit or in the form a number of lit lights, or in some other representation (e.g., color codes). The number indicated by the indicator elements corresponds to the number of pills of a particular type to be placed in the corresponding deck cutout 21A, 21B. This provides the advantage that the operator does not need to look at the medication plan during dispensing/arranging of a particular type of pill, for example as displayed on the display 64.

The support section 3 is arranged underneath the top deck 2. The upper surface of the support section 3 abuts against the bottom surface of the top deck 2 and thereby provides a support for any pills placed in the deck cutouts 21A, 21B while the top deck 2 is in the first default configuration. As described below in more detail, the workstation 1 comprises a lighting system such that the support section 3 provides a backlight for the deck cutouts 21A, 21B.

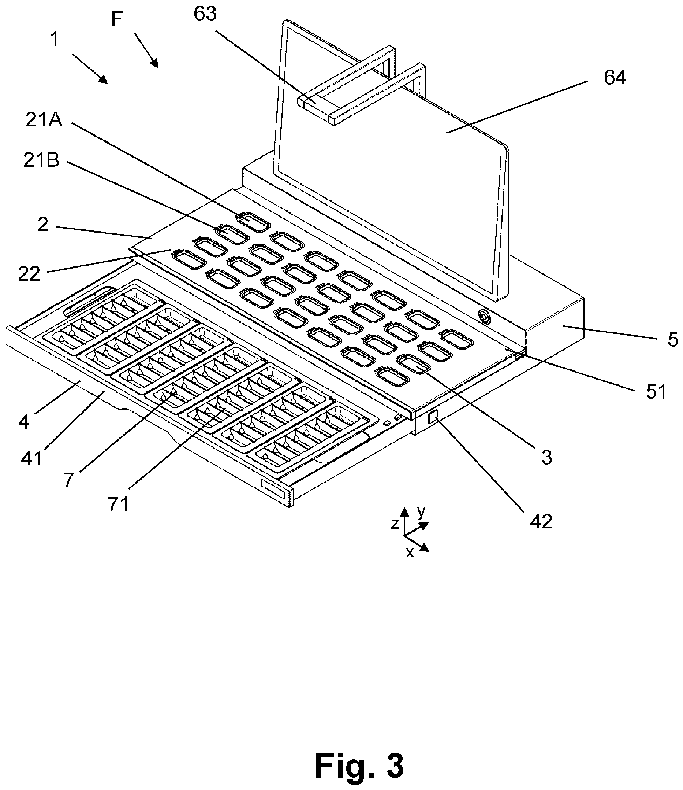

The receiving compartment 4 is arranged below the support section 4 and is designed to receive a medication tray, the medication tray including a plurality of receptacles for receiving medication. The receiving compartment 4 as depicted includes a drawer (shown in more detail in Fig. 3 below) which can be pulled out to place and remove the medication tray.

The display 64 is oriented substantially vertically, however its angle of tilt may be adjustable. The display 64 is configured to display the medication plan and may further comprise additional instructions. The display of the medication plan may be in the form of a sequence or other structured workflow, as is described below in more detail.

The camera 63 is arranged on the stand above the top deck 2 and oriented downwards towards the top deck 2. The camera 63 is designed such that it can record an image of the entire top deck 2, in particular the top deck cutouts 21A, 21B and any medication placed therein.

**Fig. 2** shows the workstation 1 depicted in Fig. 1, however the workstation is shown in the second drop configuration S. In this second drop configuration S, the top deck 2 has been moved backwards towards the back of the base 5. By doing so, the deck cutouts 21A, 21B now align vertically with support cutouts 31A, 31B in the support section 3, which allows for any medication placed in the deck cutouts 21A, 21B to fall through the support section 3 into the receptacles of the medication tray placed in the receiving compartment 4. The support cutouts 31A, 31B may be arranged in a corresponding, preferably identical, pattern as the deck cutouts 21A, 21B.

**Fig. 3** shows the workstation 1 shown in Figs. 1 and 2 with the top deck 2 in the first default configuration F and with the drawer 31 of the receiving compartment 4 pulled out, showing the medication tray 7 inserted into the drawer 31. The medication tray 7 has seven columns and eight rows of receptacles 71. The medication tray 7 therefore has more rows available than the top deck 2 or the support section 3 have rows of cutouts 21A, 21B, 31A, 31B, respectively. In order for the workstation to address all eight rows of receptacles 71 in the medication tray 7, the receiving compartment 4 includes a push button 42 is a user input element for receiving input from the operator, to ensure a clear field of view for the camera. The first defined position allows for a first set of rows of receptacles 71 of the medication tray 7 to be addressed (i.e. the addressed receptacles 71 line up vertically with the support section cutouts). For example, in the first position, rows 1, 3, 5, and 7 of the medication tray 7 are addressed. The second defined position allows for a second set of rows to be addressed, for example rows 2, 4, 6, and 8. The workstation 1 is therefore adapted to prepare medication trays 7 which feature a plurality of different numbers of rows of receptacles 71.

Depending on the embodiment, the receiving compartment 4 may receive one or more medication trays 7 which each have only a single column of receptacles 71. Such medication trays 7 may include medications for a particular patient for only a single day.

The workstation 1 may include a tray detector, for example arranged in the receiving compartment 4, to detect the placement of the medication tray in the receiving compartment 4 and/or detect that the drawer 41 is closed. The tray detector may be implemented as a switch or capacitive contact sensor, for example.

The workstation 1 may include a tray position detector configured to detect which position the medication tray 7, respectively the drawer 41, is in (i.e., the first position or the second position). The tray position detector may be implemented, for example, using reed switches arranged inside the receiving compartment 4 with one or more magnet arranged on the drawer 41. For example, the receiving compartment 4 includes two reed switches set apart from each other in the y-direction, and the drawer includes a magnet arranged such that, when the drawer 41 is in the first position, the first reed switch is activated, and when the drawer 41 is in the second position, the second reed switch is activated.

The workstation 1 may further include a top deck position detector configured to detect the configuration of the top deck 2, in particular whether it is in the first default configuration F or not. The top deck position detector may be implemented as a switch, for example a reed switch with a magnet counterpart fixedly arranged on the base 5, or capacitive contact sensor, for example.

The workstation 1 may further comprise a locking mechanism to prevent movement of the top deck 2 from the first default configuration F to the second drop configuration S if the medication was not properly placed in the top deck cutouts 21A, 21B. The locking mechanism may be implemented using an actuator which limits or prevents movement of the top deck 2, for example a linear actuator which moves a bolt into a recess in the top deck 2.

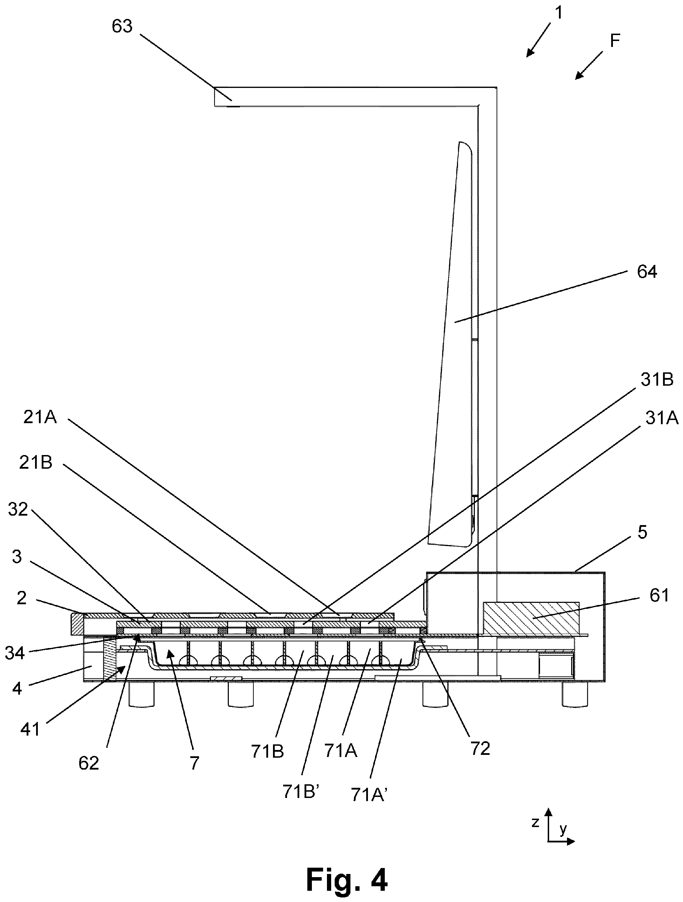

**Fig. 4** shows a section view of the workstation 1 in the first default configuration F. The section view cuts through the deck cutouts 21A, 21B and the support cutouts 31A, 31B, showing that in the first default configuration F they are not vertically aligned and therefore the medication placed in the deck cutouts 21A, 21B rests on the integral sections of the support section 3.

The support section 3 comprises a top light transmissible layer 32, for example comprising a translucent material. The light transmissible layer 32 includes the support cutouts 31A, 31B. The light transmissible layer 32 is arranged ontop of a light support section 34. The light transmissible layer 32 is vertically spaced apart from the light support section 34 by means of spacer elements 33.

The light support section 34 may be implemented by a printed circuit board (PCB). The lighting system 62 is implemented in the support section 3 and comprises a plurality of lights arranged on the light support section 3 arranged to shine light upwards through the light transmissible layer 32 such that the light transmissible layer 32 acts as a backlight for the deck cutouts 31A, 31B. For example, a plurality of LEDs is arranged on the light support section 32 underneath the deck cutouts 31A, 31B. The lights may emit light in a defined spectrum, for example a visual spectrum or an infrared spectrum. The light spectrum produced by the lighting system 62 may be defined by a colour temperature, the colour temperature may be 3000 K - 7000 K, for example 5500 K. The light of the lighting system is preferably broad spectrum and white.

A control unit 61 is arranged in the rear section of the base 5 of the workstation 1. The control unit 61 is preferably arranged on the same PCB as the lights. In other words, the PCB implements the light support section 32 and a control unit PCB. Alternatively, separate PCBs are used and connected via a bus.

As shown, any pills placed in the deck cutout 21A will fall, when the top deck 2 is pushed backwards into the second drop configuration S, through the support cutout 31A and into the receptacle 71A of the medication tray. Similarly, any pills placed in the deck cutout 21B will fall into the receptacle 71B.

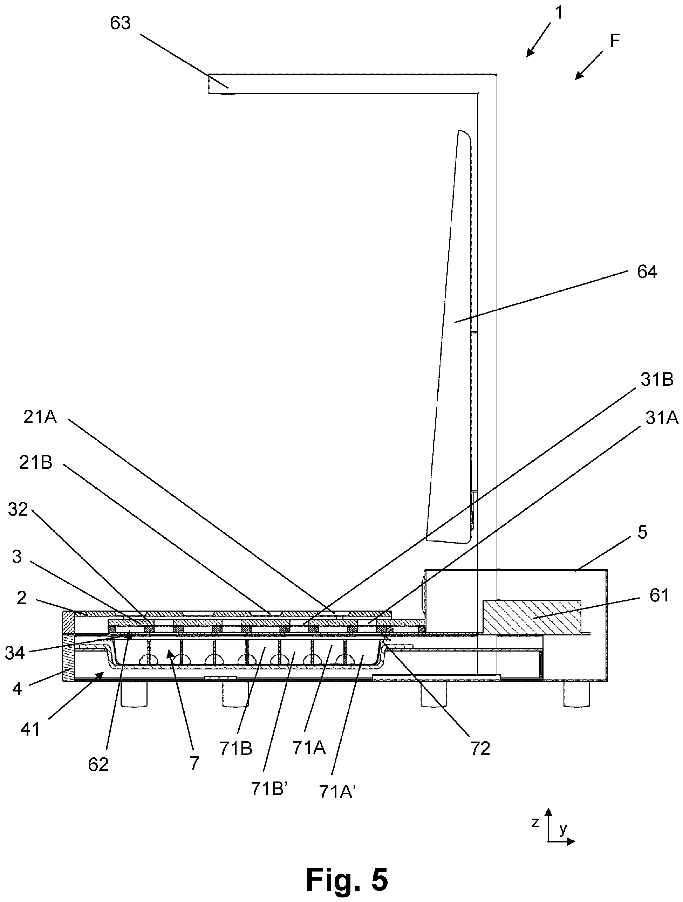

**Fig. 5** shows the same section view of the workstation 1 as Fig. 4, with the exception that the drawer 4 has been pulled further forward into a second position, such that a second set of receptacles is addressed. Now, receptacle 71A' is addressed by the deck cutout 21A instead of receptacle 71A. The same applies to receptacle 71 B', which is now addressed by the deck cutout 21B instead of receptacle 71B.

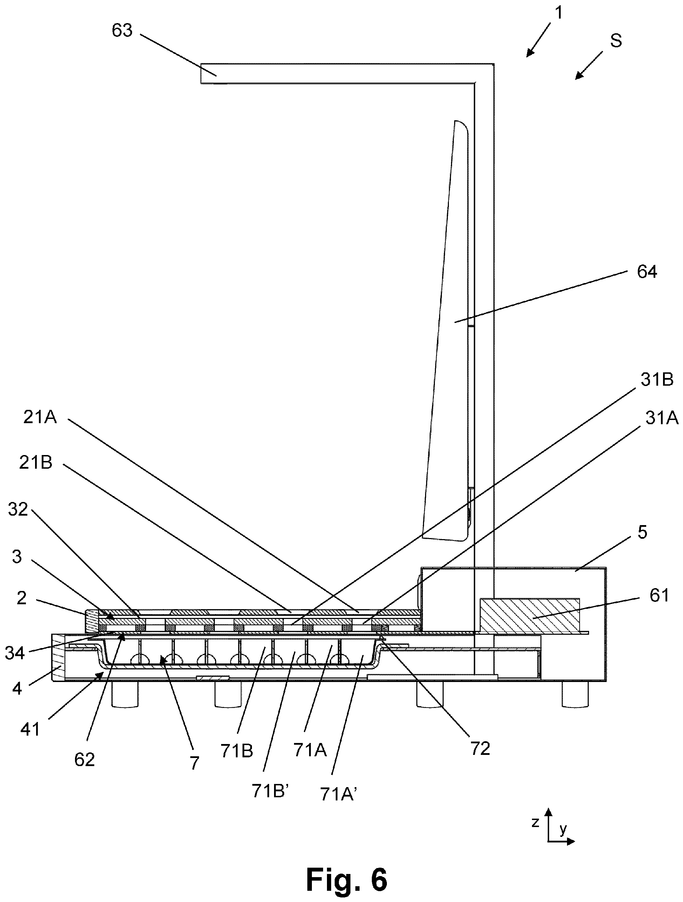

Fig. 6 shows the same section view of the workstation 1 as Fig. 5, however the top deck 2 has been shifted back into the second drop configuration S. Thereby, any pills present in the top deck cutouts 21A, 21B fall into the corresponding receptacles.

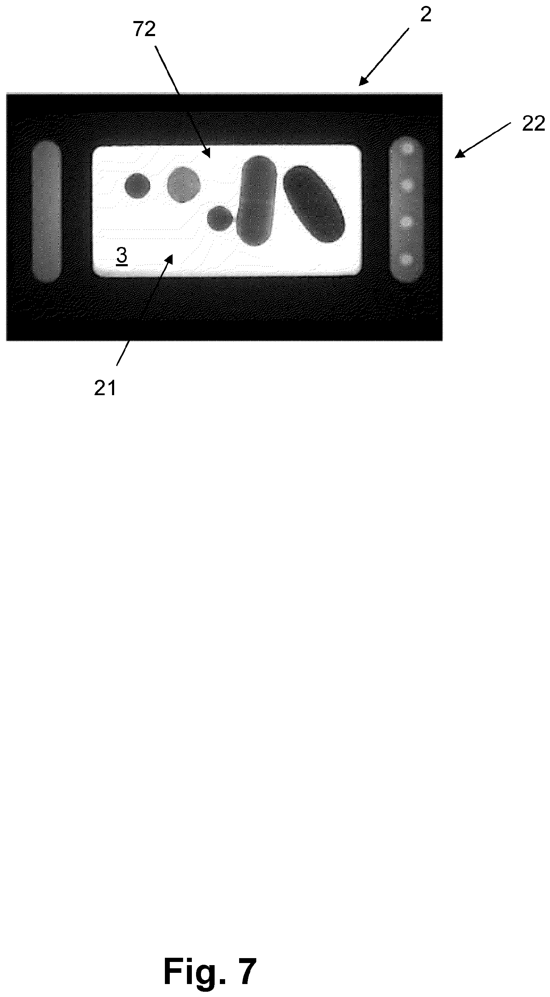

**Fig. 7** shows a cropped image recorded by the camera 63. The cropped image shows a top down view of part of the top deck 2, in particular a single deck cutout 21 with five pills 72 arranged in the deck cutout 21. The pills 72 are lying on the support section 3 and the lighting system is active, such that the support section 3 acts as a backlight, placing the pills 72 in stark relief (i.e. there is a strong contrast in terms of brightness levels between the support section 3 and the pills 72 themselves). In the image shown, a plurality of different types of pills are present in the deck cutout. In some embodiments, however, only a single type of pill is present in the deck cutout at any one point in time, and typically at most four pills of the same type will be in single deck cutout at a time. This improves the checking step described herein, in which the control unit checks whether the pills were placed correctly according to the medication plan.

The backlight allows for superior detection and identification of the pills 72 in the image by the control unit 1, in particular as the control unit 1 can more accurately determine the shape and size, in particular the outer contour of the pills 72. This may otherwise be difficult with overhead light sources due to differing or unpredictable ambient lighting conditions causing cast shadows or occlusion.

Indicator elements 22 are arranged next to the deck cutout 21 in a column formation and include four LEDs which can light up to indicate the amount of a type of pill to place in the deck cutout 21.

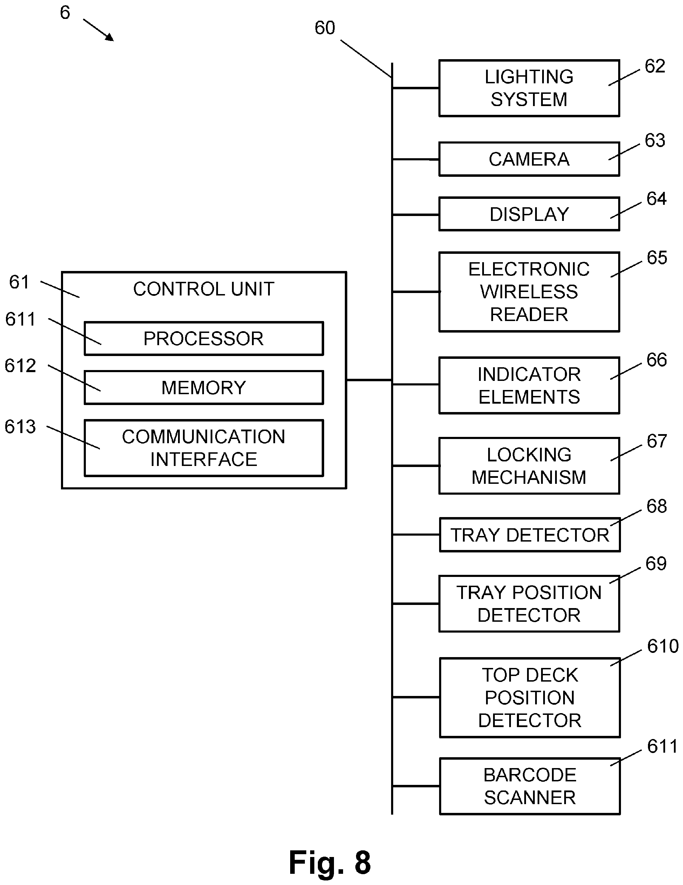

**Fig. 8** shows a block diagram illustrating schematically an electronic system 6 of the workstation. The electronic system 6 comprises a control unit 61, as well as a lighting system 62, camera 63, display 64, electronic wireless reader 65, indicator elements 66, locking mechanism 76, and/or the tray detector 68. At least some of the components of the electronic system 6 are not mandatory.

The electronic system 6 comprises a connection system 60 which connects the control unit 61 to the other components of the electronic system 6. The connection system 60 may provide power and/or data interconnectivity and may comprise or be implemented using cables, leads, traces, circuit boards, and/or other electric connectors or connections. The connection system 60 may comprise wired and/or wireless data exchange.

The control unit 61 comprises a processor 611, a memory 612, and a communication interface 613. The control unit 61 is configured to control at least some functionality of the workstation 1. The control unit 61 is preferably arranged in the base 5 of the workstation 1. The control unit 61 embodies a programmable device and comprises, for example, one or more processors 611, and memory 612 one or more memory modules having stored thereon program code, data, as well as programmed software modules for controlling the processors 611, and/or other programmable circuits or logic units included in the control unit 3, such as ASICs (Application-Specific Integrated Circuits), GPUs (graphics processing units), and/or TPUs (tensor processing units). The memory modules comprise volatile and/or non-volatile storage media, for example random access memory and/or flash memory, respectively. The control unit 61 is connected to other components and modules of the workstation 1 as disclosed herein, in particular the lighting system 62, the camera 63, and the display 64.

The control unit 61, depending on the embodiment, further comprises a communication interface 613. The communication interface is configured for data communication with one or more external devices. Preferably, the communication interface comprises a network communications interface, for example an Ethernet interface, a WLAN interface, and/or a wireless radio network interface for wireless and/or wired data communication using one or more networks, comprising, for example, a local network such as a LAN (local area network), and/or the Internet.

The control unit 61 performs one or more steps and/or functions as described herein, for example according to the program code stored in the memory 612. Additionally, or alternatively, the program code can be wholly or partially stored in one or more auxiliary processing devices, for example a networked computer. The skilled person is aware that at least some of the steps and/or functions described herein as being performed on the processor of the control unit 61 may be performed on one or more auxiliary processing devices connected to the workstation 1 using the communication interface 613. The auxiliary processing devices can be co-located with the workstation 1 or located remotely, for example on a remote server computer.

The skilled person is also aware that least some of the data associated with the program code (application data) or data associated with a particular patient (patient data, in particular a medication plan of the patient) and described as being stored in the memory of the workstation 1 may be stored on one or more auxiliary storage devices connected to the workstation 1 using the communication interface 613 and provided to the workstation 1 as required.

The control unit 61 stores, in the memory 61, a medication plan.

The camera 63 may be implemented by a camera configured to record images in the visible and/or infrared spectrum. The camera may be implemented, for example, using a webcam. The camera should have sufficient resolution to clearly resolve pills placed in the deck cutouts.

The display 64 may be implemented using a flat panel display, for example an LCD or OLED display. The display 64 may include a touch interface for receiving touch input from the operator.

The electronic system 6 may further include one or more speakers and/or microphone(s) to provide acoustic signals to the operator, or to receive audio input from the operator.

The electronic system 6 may further comprise an electronic wireless reader 65, indicator elements 66, a locking mechanism 67, a tray detector 68, a tray position detector 69, and a top deck position detector 610. Additionally, a barcode scanner 611 may be included in the electronic system 6. The barcode scanner 611 may be implemented as a peripheral device connected to the workstation 1. The barcode scanner 611 may also be implemented using the camera 63.

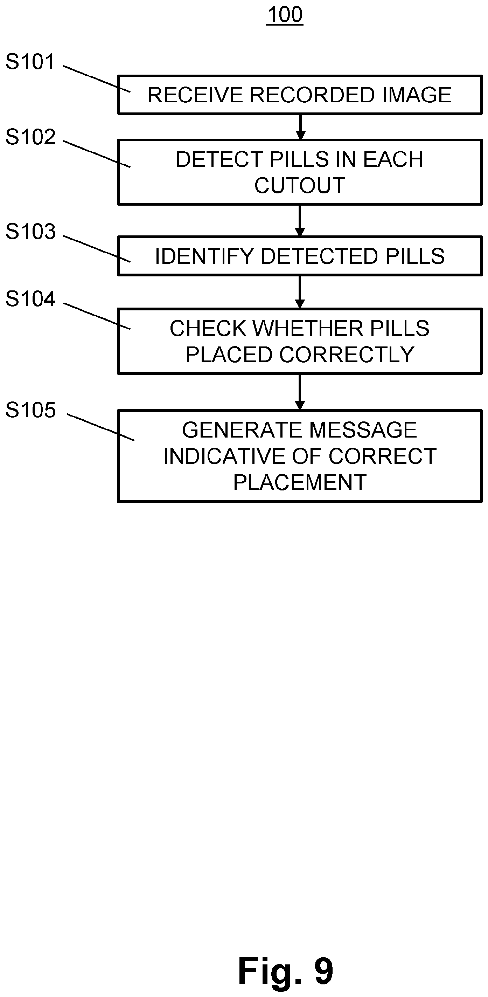

**Fig. 9**shows a flow diagram illustrating a method 100 for checking if pills were placed correctly in the deck cutouts. The method 100 may be performed standalone. The method 100 may however be performed as part of another method described herein, in particular method 200 and/or method 300. The method 100 includes steps S101 to S105. At least some of the steps are option. The method 100 is performed by the workstation, in particular by the control unit in conjunction with one or more further components of the workstation.

In step S101, the recorded image of the top deck of the workstation is received from the camera. In particular, the recorded image includes the deck cutouts. Preferably, the recorded image is backlit by use of the lighting system during recording of the image.

In step S102, pills are detected in each deck cutout. The pills may be detected in deck cutout by the control unit using an image processing module. The image processing module may comprise an application, library and/or other computer program code stored in the memory of the control unit. The image processing module may be configured to detect the pills using image segmentation, in particular by determining areas within the deck cutouts which have a lower brightness value in comparison with the remainder of the deck cutouts, which, due to the backlight, have a very high brightness value.

The image processing module may be configured such that the brightness levels in the cropped image are adjusted such that the deck cutout background, i.e. the brightly illuminated part of the support section visible inside the deck cutout, has a defined brightness level, which may even be "clipped" (adjusted to a maximum brightness level, i.e. completely white). The image processing module may be configured to detect the pills as regions of lower brightness.

The image processing module may use, as a basis of comparison, a pre-stored baseline image recorded without any pills present. By subtracting the image recorded with pills present from the baseline image without pills present, the pills may be detected as areas of difference between the images.

The image processing module may be configured to extract one or more crops from the recorded image, for example performing a series of substantially rectangular crops (respectively rectangular crops with rounded corners to match the shape of the deck cutouts) and thereby extracting each deck cutout from the recorded image. The detection of pills in all the cutouts may be performed sequentially or in parallel. The detection may be performed using a comparison between the baseline image and the (current) recorded image.

The detected pills may be associated with the deck cutout in which they were detected, in particular with an identifier of each deck cutout assigned to each deck cutout. The detected pills may be recorded by way of recording their coordinates in the recorded image, or in a cropped image associated with a particular deck cutout.

The result of the pill detection may be stored as a list, for example, of deck cutouts and the number of pills detected for each deck cutout along with optionally the coordinates of the detected pills for each deck cutout.

In step S103, the detected pills are identified such that a type of pill can be assigned to each detected pill. The detected pills are identified on the basis of their physical characteristics as recorded in the image, primarily on the basis of their size and shape. However, other attributes may also be considered, in particular their color and/or markings which may be present on the pills. The physical characteristics of the pills are determined using the image processing module.

The physical characteristics are then compared to the known physical characteristics of a plurality of types of pills. The known physical characteristics of the plurality of types of pills may be retrieved from the memory, or retrieved from a remote source, such as a remote server or database, by way the communication interface.

A matching process takes place in which the physical characteristics of each detected pill is compared with the known physical characteristics of the plurality of types of pills to determine a most likely match. A defined minimal match threshold may be used to determine whether there is a sufficiently high match at all, in other words whether the detected pill can be identified at all.

If the detected pill is positively identified, then the type of pill it has been identified as is recorded in association with the deck cutout in which it is located.

The result of step S103 is that, for every detected pill, either its identified type of pill is determined or the detected pill is determined as not being of a known type, or of not being identifiable. In the ideal case where every detected pill is positively identified, the pill type is recorded along with the deck cutout in which it is located/placed.

In step S104, the defined medication plan is used to check whether the pills were placed correctly. That is to say, whether every deck cutout which is to have one or more pills placed, has the correct number and type of pills placed, and every deck cutout which is not to have any pills does indeed not have any pills placed in it (i.e. check whether the pills were placed correctly includes checking for missing pills). The defined medication plan may be retrieved from memory or from a remote source such as a server or database.

In step S105, if all pills were placed correctly, a message may be generated indicative of correct placement. This message may be displayed on the display. The message may also be recorded. The message may be used to trigger further actions or functions of the workstation, for example releasing a locking mechanism as described below.

The above described method 100 may be performed sequentially for different types of pills in a single preparation process for a medication tray. For example, the method 100 may be performed five times, if the medication plan calls for five different types of pills to be placed in the medication tray.

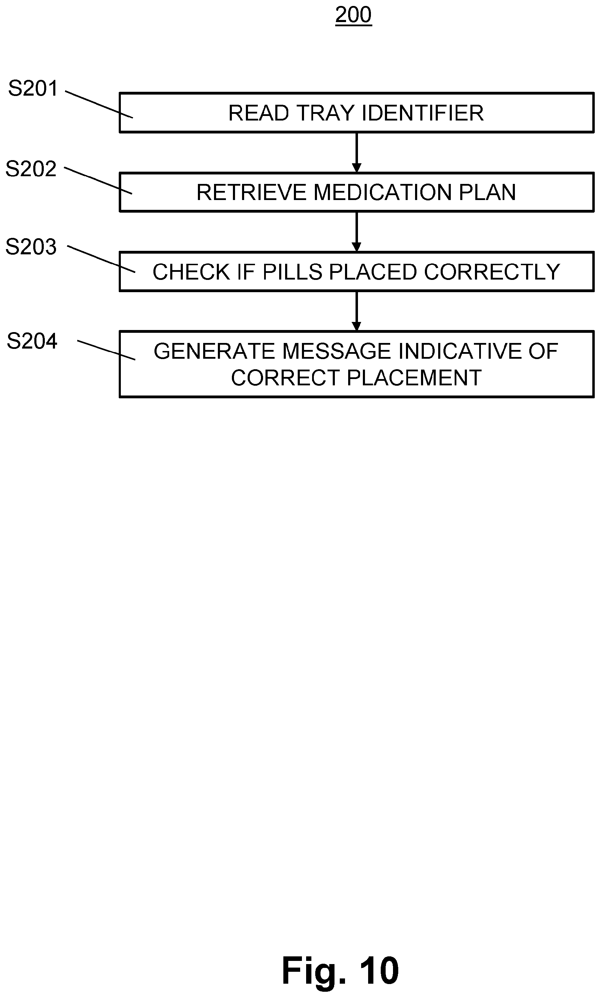

**Fig. 10**shows a flow diagram illustrating a method 200 for preparation of a medication tray. The method 200 comprises a series of steps S201 to S204, at least some of which may be optional. The method 200 is performed using the workstation, in particular by the control unit.

The method 200 is performed on demand, whenever a medication tray is to be prepared. The method 200 may be initiated by an action of the operator, for example by the operator inserting an empty medication tray into the drawer, or the operator entering a patient identifier into the workstation, for example using the display.

In step S201, a medication tray identifier is read, from a medication tray tag of a medication tray placed in the receiving compartment. The medication tray identifier is read by the electronic wireless reader of the workstation. The medication tray tag is an electronic tag, for example in the form of an RFID tag, which is attached to the medication tray and has stored thereon the medication tray identifier. The medication tray identifier is a code, for example an alphanumeric string, which uniquely identifies the medication tray. Thereby, the medication tray may be tracked, in particular once it leaves the workstation after being prepared.

In step S202, a medication plan is retrieved by the control unit. The medication plan may be retrieved from the memory or using the communication interface from a remote server or database. The medication plan may be retrieved according to a patient identifier input by the operator, for example using a keyboard, touch display, or other input means connected to the control unit of the workstation. The patient identifier may include a code, number, name, date of birth, etc. The patient identifier may also be entered into the control unit by reading a code, for example reading a barcode or reading an RFID tag provided by the operator to an appropriate scanning or reading device connected to the control unit.

The workstation may be configured to associate the medication tray identifier with the medication plan and/or the patient identifier. The association may be stored in the memory and/or transmitted as part of a message to a remote server and/or database.

The medication plan includes, for the particular patient, at least one or more medication types (e.g. specific medicaments in the form of individual pills or tablets) and a medication schedule, the medication schedule indicating prescribed amounts and times at which each of the types of medication is to be consumed. Each type of medication may be indicated by one or more of the following: the trade name, brand, type(s) of active ingredient(s), dose(s) of active ingredient(s), formulation, etc.

In step S203, which is described in more detail with reference to method 100 herein, the workstation, in particular the control unit, checks, using the one or more recorded images and the medication plan, whether the pills were correctly placed.

If the pills were not placed correctly, e.g., if one or more deck cutouts has more pills of the particular type than should be there according to the medication plan, or if one or more deck cutouts has no pills although they should according to the medication plan, then the workstation may indicate this, for example by providing an error or warning message to the operator via the display or other means.

The error or warning message may indicate to the user where the error lies, i.e. in which deck cutouts pills are either missing or placed incorrectly.

The workstation may additionally provide a warning if the image check was not able to be performed, for example because a pill was detected but not identified correctly. The user may then adjust the pill and instruct the workstation to re-record the image.

In step S204, which is analogous to step S105 described above, a message may be generated indicative of correct placement if all pills were placed correctly.

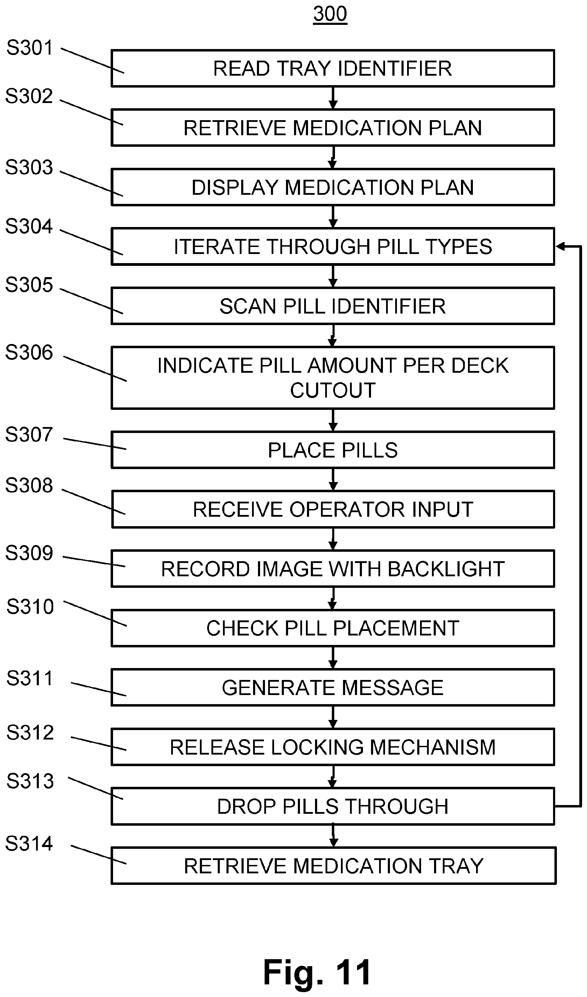

**Fig. 11** shows a flow diagram illustrating a method 300 for preparation of a medication tray. The method 300 comprises a series of steps S301 to S314, at least some of which may be optional. The method 300 is performed using the workstation as described herein. While some of the steps are performed by an operator of the workstation, other steps are performed in an automated fashion by the workstation, in particular by the control unit, and at least some of the steps guide the operator through a continuous interactive process for preparation of a medication tray.

The method 300 is performed on demand, whenever a medication tray is to be prepared. The method 300 may be initiated by an action of the operator, for example by the operator inserting an empty medication tray into the drawer, or the operator entering a patient identifier into the workstation, for example by using the (touch) display. The patient identifier may also be entered by scanning, using the barcode scanner or the camera, for example, an item such as a tag or document which includes an identifier of the patient. The identifier may be in a human readable format, such as an alphanumeric string or a name. The identifier may also be in the form of a visual code, such as a barcode or a QR code.

Some of the steps described below are analogous to steps described herein with reference to other methods, in particular methods 100 and/or 200.

Steps S301 and S302, which relate to reading the medication tray identifier and retrieving the medication plan, respectively, are performed analogously to steps S201 and S202 of method 200.

In an optional step, a personnel identifier of the operator may be read and recorded in association with the medication tray identifier and/or the medication plan. The personnel identifier may be entered into the workstation by the operator, for example using input means such as a touch display or a keyboard. Alternatively, the operator may scan a badge or barcode into the workstation using a badge reader or the barcode scanner integrated with, or connected to, the workstation.

In step S303, the medication plan is displayed to the operator, in particular by being displayed on the display. The medication plan as displayed may indicate the different types of medication required for preparing the medication tray for the particular patient. For example, the medication plan may list a schedule such that the different types of medication required according to the medication plan and when each type of medication is to be taken by the patient is displayed. A summary may also be displayed which may indicate only the different types of medication and the total number of each pill required for the coming day, day(s), or week covered by the medication plan and to be prepared in the medication tray.

In an embodiment, the workstation performs step S304 which iterates through the plurality of types of medication included in the medication plan. For each different type of medication included, the following steps S305 to S313 may be performed. If only one type of pill is included, only one iteration is required. If five different types of pill are included in the medication plan, then five iterations may be necessary. In some embodiments, iteration is not necessary as all different types of pills can be checked in step S310 simultaneously.

Iterations may be necessary if the pills included in the medication plan have similar physical characteristics and thereby the workstation, in particular the image processing module executed by the control unit, may not be able to distinguish two different types of pills from each other in a sufficiently reliable manner due to the two types of pills having a similar size and/or shape. However, if two or more types of pills included in the medication plan have very different physical characteristics, such as markedly different sizes and/or shapes, then these two or more different types of pills may be placed and checked simultaneously, and therefore the number of iterations may be reduced.

Therefore, while the steps S305 to S313 below are described within the context of a single type of pill being placed and checked, the considerations apply equally in scenarios where multiple different types of pills are placed and checked at the same time.

In step S305, the operator scans a pill package, for example a box including blister packs of pills, into the workstation. For example, the barcode scanner or the camera may be used to scan the pill package. The workstation is configured to determine whether the scanned pill package is indicative that the pills included in the pill package match one of the different types of pills included in the medication plan. If there is a positive match, then the method proceeds. If there is no match, an error or warning message may be displayed and the operator may retry, for example with a different pill package. The display may indicate, in case of a positive match, a total number of pills required for the period of time for which the medication tray is to be prepared for (e.g., a day or a week). In an alternative embodiment, a first type of pill is indicated, on the display, from amongst the plurality of pills indicated in the medication plan. The display may indicate a total number of pills required for the period of time for which the medication tray is to be prepared for (e.g., a day or a week). The operator may then retrieve the appropriate number of first type of pill from a repository.

In an optional step S306, the workstation 1, by way of the indicator elements, indicates the number of pills to be placed in each of the deck cutouts. For example, some deck cutouts may indicate that no pills are required, while others may require a single pill or even multiple pills of the first type of pill. The workstation may confirm that the top deck is in the first default configuration.

The operate may then easily place, in step S307, the appropriate number of pills in the correct deck cutouts, and, if step S306 was performed, without having to consult the display, thereby working efficiently and having to look only at the top deck when placing pills.

In an optional step S308, the operator may provide a user input to the workstation, for example via the touch display or other user input means, for example via the push button, indicating that all the pills of the first type were placed according to the medication plan.

In step S309, the workstation activates the lighting system and records one or more images of the top deck using the camera. The lighting system preferably illuminates simultaneously with the camera recording the image. The lighting system may be configured or controlled to illuminate only for a short period of time, thereby acting as a flash for the camera.

In step S310, the workstation checks whether the pills were placed correctly. This step S310 is analogous to step S203 as described above, and in particular may be performed according to steps S101 to S105 of method 100.

In step S311, if all pills were placed correctly, a message may be generated indicative of correct placement.

In an optional step S312, which may be performed in case the workstation has a locking mechanism to lock movement of the top deck, the workstation releases the locking mechanism if the previous step S311 or S311 was completed successfully in that all pills were placed correctly.

In step S313, the operator pushes the top deck back, bringing the top deck from the first default configuration into the second drop configuration and thereby allowing the pills in the deck cutouts to fall through the support cutouts in the support section and into the medication tray.

In an embodiment, step S313 may also be performed automatically by provisioning the workstation with an actuator configured to actuate the movement of the top deck from the first default configuration to the second drop configuration. For example, a linear actuator may be provided and connected to the control unit.

In such an embodiment, the locking mechanism can be omitted, as the actuator may also implement a form of locking mechanism at least in that it prevents movement of the top deck by hand.

After the pills have dropped through, the top deck is returned to the first default configuration, either manually or by way of a biasing mechanism. The workstation may confirm that the top deck is in the first default configuration. At this point, the method 300 may return to step S304 and proceed through steps S305 to S313 again for a second type of pill. By iterating through different pill types and separately checking, using the camera and the control unit, whether pills of each type of pill are placed correctly, the reliability is improved as the image processing algorithms which are used to implement the checking step(s) only need to check one particular type of pill at a time, reducing errors caused by pills touching, resting against each other or even partially overlapping and thereby obscuring each other.

Once all the different types of pills have been prepared in the deck cutouts, checked and dropped through into the medication tray, step S314 is performed in which the operator retrieves the medication tray from the receiving compartment.

In an optional final step, the completion of method 300 may be recorded to memory, in particular in conjunction with the tray identifier, the patient identifier and the medication plan. A message indicative of completion of the preparation of the medication tray may be generated by the control unit, the message comprising the medication tray identifier, the patient identifier and an indication of the medication plan. The message may further comprise an identifier of the operator of the workstation for logging and traceability purposes.

The above-described embodiments of the disclosure are exemplary and the person skilled in the art knows that at least some of the components and/or steps described in the embodiments above may be rearranged, omitted, or introduced into other embodiments without deviating from the scope of the present disclosure.

## Claims

1. A workstation (1) for preparation of a medication tray (7), the workstation (1) comprising:
a top deck (2) with a plurality of deck cutouts (21, 21A, 21B) arranged in a defined deck pattern;
a support section (3) arranged underneath the top deck (2), wherein the support section (3) comprises a light transmissible layer (32);
a lighting system (62) configured to transmit light into the light transmissible layer (32); and
a receiving compartment (4) arranged underneath the support section (3),
configured to receive a medication tray (7) having a plurality of receptacles (71, 71A, 71B).

2. The workstation (1) according to claim 1, wherein the support section (3) includes a plurality of support cutouts (31, 31A, 31B) arranged in a defined support section pattern which at least partially matches the deck pattern, the support cutouts (31, 31A, 31B) laterally offset from the deck cutouts (21, 21A, 21B).

3. The workstation (1) according to one of the previous claims, wherein the lighting system (62) is configured to cause the support section (3) to provide a back light for the deck cutouts (21, 21A, 21B) in the top deck (2).

4. The workstation (1) according one of the previous claims, wherein the top deck (2) and the support section (3) are arranged displaceable relative to each other in a lateral direction between a first default configuration (F) and a second drop configuration (S), wherein the deck cutouts (21, 21A, 21B) and the support cutouts (31, 31A, 31B) do not align in a vertical direction in the first default configuration (F) and the deck cutouts (21, 21A, 21B) and the support cutouts (31, 31A, 31B) at least partially overlap in a vertical direction in the second drop configuration (S).

5. The workstation (1) according to one of the previous claims, wherein the support section (3) is fixedly fastened to the workstation (1) and the top deck (2) is laterally movable relative to the support section (3).

6. The workstation (1) according to one of the previous claims, wherein the support section (3) comprises a light transmissible layer (32) and a light support section (34) arranged underneath the light transmissible layer (32), and the lighting system (62) comprises a plurality of lights arranged on top of the light support section (34) and configured to direct light upwards into and through the light transmissible layer (32).

7. The workstation (1) according to one of the previous claims, wherein the receiving compartment (4) comprises positioning elements designed to position the medication tray (7) in one of two or more different positions.

8. The workstation (1) according to one of the previous claims, further comprising a camera (63) arranged above the top deck (2) and oriented towards the top deck (2).

9. The workstation (1) according to claim 8, further comprising a control unit (61) connected to the lighting system (62) and the camera (63), configured to control the lighting system (62) and the camera (63) such that the lighting system (62) activates simultaneously with the camera (63) recording an image, in particular such that the lighting system (62) provides back lighting of the deck cutouts (21, 21A, 21B) while the camera (63) records the image.

10. The workstation (1) according to claim 9, wherein the control unit (61) is configured to perform the following steps:
receiving (S101) from the camera (63) the recorded image;
detecting (S102) one or more pills in the plurality of deck cutouts (21, 21A, 21B), using the recorded image;
identifying (S103), for each detected pill, which type of pill the detected pill is, from amongst a plurality of different types of pills;
checking (S104), using the identified pills, whether the pills were correctly placed according to a defined medication plan; and
generating (S105) a message indicative of correct placement of the pills,
if the pills were placed correctly.

11. The workstation (1) according to claim 10, wherein the control unit (61) is further configured to perform the steps of receiving, detecting, identifying, checking and generating, for each of a plurality of different types of pills.

12. The workstation (1) according to one of the previous claims, wherein the top deck (2) further comprises an indicator element (22) arranged in, at, or adjacent to each deck cutout (21, 21A, 21B), a particular indicator element (22) configured to provide an indication of a number of pills to be placed in the particular deck cutout (21, 21A, 21B).

13. The workstation (1) according to one of claims 9 to 12, further comprising a display (64) connected to the control unit (61) and configured to display a number of pills of a particular type to be arranged in the deck cutouts (21, 21A, 21B).

14. The workstation (1) according to one of claims 9 to 13, further comprising a locking mechanism (67) connected to the control unit (61), the control unit (61) configured to control the locking mechanism (67) to allow relative movement between the top deck (2) and the support section (3) only upon determination that the pills were placed correctly.

15. The workstation (1) according to one of claims 9 to 14, wherein the control unit (61) comprises a communication interface (613) and is connected to an electronic wireless reader (65), and the control unit (61) is configured to:
read (S201), using the electronic wireless reader (65), from the medication tray (7), a medication tray identifier;
receive (S202), using a communication interface (613), a defined medication plan;
check (S203) whether pills (72) were placed correctly according to the defined medication plan; and
generate (S204) a message indicative of correct placement of the pills,
wherein the message further comprises the medication tray identifier.
